# EUROPEAN PATENT SPECIFICATION

(11) **EP 0 791 873 B1**
(45) Date of publication and mention of the grant of the patent: **01.08.2001**
(21) Application number: 97102068.0
(22) Date of filing: 10.02.1997
(51) Int. Cl.: G05B 19/416

(54) **Grinding method and apparatus for cylindrical workpieces**
Schleifverfahren und -vorrichtung für zylindrische Werkstücke
Méthode et appareil de meulage pour des pièces cylindriques

(30) Priority: 16.02.1996 GB 9603260
(43) Date of publication of application: 27.08.1997
(73) Proprietor: Unova U.K. Limited, Aylesbury, Buckinghamshire HP20 2RQ (GB)
(72) Inventor: Laycock, Michael, Keighley, West Yorkshire (GB); Pickles, John, Grassington, North Yorkshire (GB)
(74) Representative: Nash, Keith Wilfrid

(56) References cited:
- EP-A- 0 282 776
- DE-A- 2 452 488
- DE-A- 3 218 785
- WERKSTATT UND BETRIEB, vol. 126, no. 2, 1 February 1993, pages 103-105, XP000350044 WEIL C: "DIE SOFTWARE MACHT'S BEIM MESSEN SOFTWARE'S THE TRICK FOR MEASURING"

## Description

### Field of Invention

This invention relates to a method of grinding cylindrical workpieces especially crankpins and to apparatus for carrying out said method.

### Background to the Invention

The size tolerance on the diameter of a finish ground crankpin is small, requiring that some form of in-process gauging be used to monitor the crankpin diameter as material is removed during the grinding process.

The work rotation speeds in CNC crankpin grinding are low relative to the stock removal rates. This is especially so in high production grinding where stock removal rates must of necessity be high so as to minimise manufacture time.

The combination of high stock removal rates and low work speed make the fast, accurate measurement of crank pin size difficult especially in view of the problems introduced by the orbiting trajectory of the crank pin that is a feature of this manufacturing process, requiring that the in-process gauging be practised by a guided sensor means, such as that described in UK Patent Specification No. 2161101B, which remains in diametrical or radial sensing contact with the workpiece during grinding. However, it is important that size be properly controlled for the manufacturing process to be acceptable.

### The Invention

According to one aspect of the present invention, there is provided a method of grinding an external surface of a cylindrical workpiece, more especially a crankpin, according to which the workpiece is ground to a predetermined target size, above final size, sensed by continuous in-process gauging, whereupon a feed dwell is initiated and the workpiece size is averaged by use of the in-process gauge and a computing means, the average workpiece size is utilised by the computing means to determine the incremental feed required to grind the workpiece to its final size, and grinding of the workpiece is completed without further gauging.

A preferred application of the invention is to grind the crankpin of a crankshaft; in this case, the computer controls the grinding wheel feed to advance and retract the wheel so as to maintain grinding contact as the crankshaft rotates.

Preferably, an initial step of fast grinding feed is employed to "roundout" the workpiece, during which the workpiece is engaged. Thus, in a preferred method, the in-process gauge is advanced onto the workpiece during the fast grinding step, and the fast grinding feed is stopped after a fixed feed amount independent of the gauge.

Preferably, after the completion of the fast grinding step the gauge signals supplied to the computer are used to determine the size to which the workpiece has been ground, the computer being programmed to ascertain if the size of the workpiece diameter is within preset limits.

In the preferred method, provided the workpiece diameter is within the limits the computer initiates the grinding feed at a medium feed rate and the grinding continues until the gauge signals indicate that the workpiece diameter is at or just below a target size, greater than the final size, at which point the computer initiates a feed dwell for N workpiece resolutions, to permit sparkout and to improve the roundness and size stability of the workpiece.

Preferably, averaging is performed using gauge size signals obtained during one or more rotations of the workpiece during or at the end of sparkout feed dwell time.

Conveniently, the workpiece diameter may be computed from gauging performed at a plurality of different angular positions of the crankpin relative to the gauge and the computer is programmed to store each computed size value together with the angular orientation of the crankpin at which the computation is performed, so that information is available from which the roundness of the workpiece can be determined, and which can be used to display a representation of the workpiece cross-section roundness in a computer display or the like. The computer may conveniently also calculate the deviations from average of the size measurements and, from use of a roundness correction table, use these calculations of deviations to calculation in calculation of the final feed increment. Preferably, moreover, the deviation of the measured values from the average value is computed for each angular position for plotting and/or display and/or indicating the workpiece roundness.

According to another aspect of the invention, there is provided apparatus for carrying out the aforesaid method comprising a grinding machine having an in-process gauge, and a computer receptive of size signals from the gauge and programmed to control the grinding machine, wherein the computer is also programmed to stop grinding and initiate a feed dwell when the workpiece has been ground to a predetermined target size, above final size, and to compute the incremental feed required to complete grinding without further gauging to achieve final size from size signals received from the gauge during the feed dwell interval.

In preferred apparatus, the computer includes a counter for counting a predetermined number of workpiece revolutions making up the feed dwell, as well as the drive means for the gauge wheels is responsive to signals received from the computer to advance the gauge during an initial ungauged first advance of the grinding wheel towards the workpiece and to retract the gauge at the beginning of the feed dwell.

The invention will now be described by way of example with reference to the accompanying drawings, in which:
Figure 1 illustrates a computer controlled grinding machine, fitted with an in process gauge;
Figure 2 is a side view of the gauge to an enlarged scale;
Figure 3 is a diagrammatic illustration of how a gauge is controlled and in turn controls the grinding cycle, via the machine controlling computer;
Figures 4a and 4b show the grinding cycle steps required to be initiated by a programme running on the computer, to perform the invention, and
Figure 5 is a graphical representation of the grinding cycle of the invention.

### Detailed description of the drawings

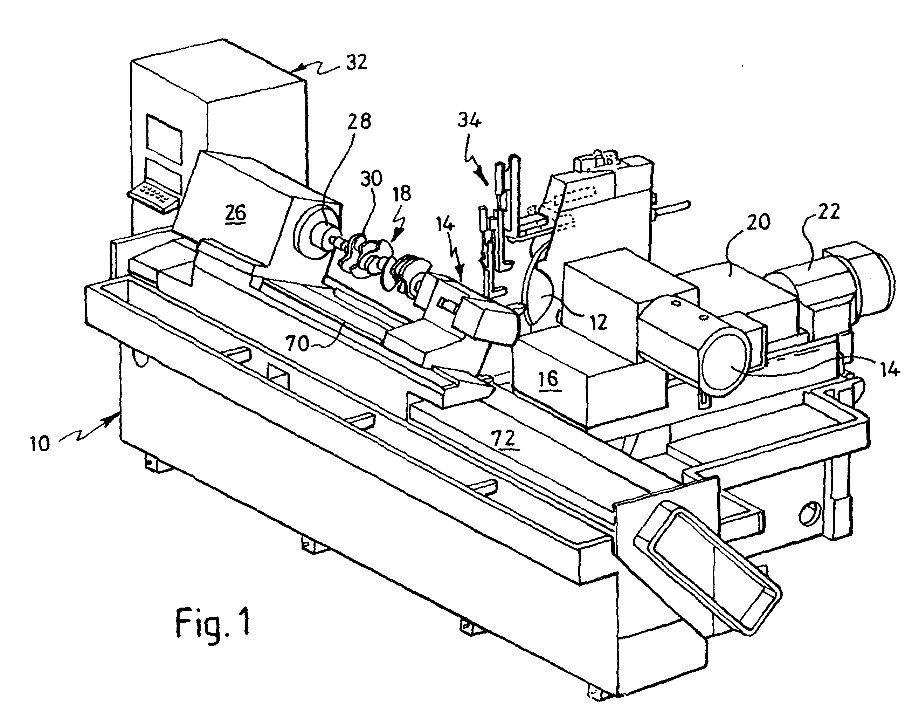

Figure 1 shows a grinding machine 10 having a grinding wheel 12 driven by a motor 14 and mounted on a wheelhead 16 for movement towards and away from a workpiece 18 along a linear track 20 under the control of the wheelfeed drive motor 22. The workpiece is mounted between centres in a tailstock 24 and a headstock 26 which also houses a motor (not shown) for rotating the workpiece 18 via a chuck 28. The workpiece shown is a crankshaft of an internal combustion engine and includes offset crankpins such as 30 which are to be ground to size, each of which constitutes a cylindrical workpiece for grinding.

A computer 32 running a programme to be described, controls the operation of the machine and inter alia moves the wheelhead 16 towards and away from the workpiece 18 as the workpiece rotates so as to maintain contact between the wheel and the crankpin being ground.

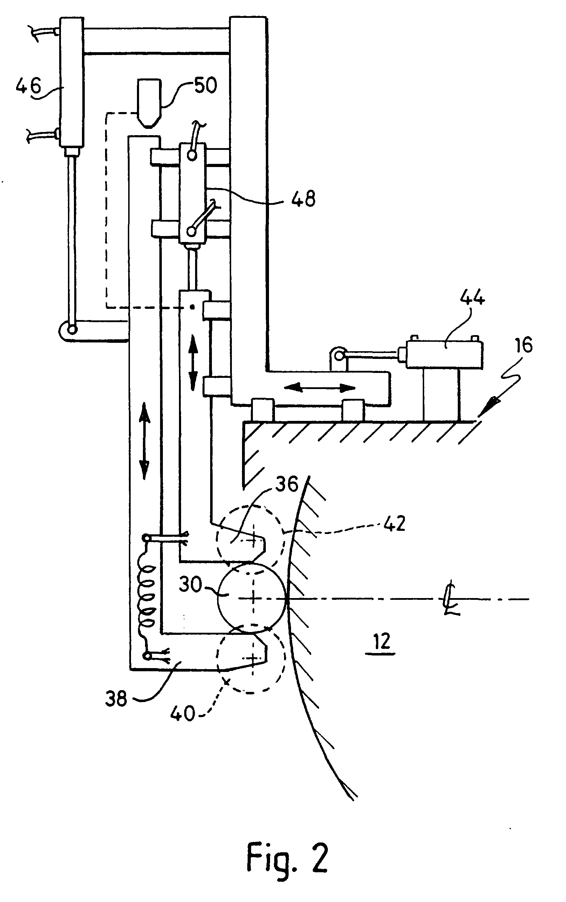

A gauge, generally designated 34, is carried by the wheelhead assembly for in process gauging the diameter of the crankpin as it is ground. The gauge is shown in its parked, non-operating position in Figure 1. During gauging it is advanced so that the fingers of the gauge (described in more detail with reference to Figure 2) are first located on the opposite side of the workpiece from the wheel, so that they can be lowered and moved towards the wheel so as to be located above and below the crankpin, and then moved towards the pin until they touch it at diametrically opposite regions for gauging.

Figure 2 shows how the fingers 36 and 38 can engage the pin 30 and the dotted outlines 40, 42 show the extreme positions of the pin relative to the wheel 12 as the pin is rotated around the axis of the crankshaft, and describes a vertical path as seen by the wheel 12. Pneumatic drives 44, 46 and 48 produce relative movement between the gauge assembly and the wheelhead 16, between the gauge assembly and the workpiece, and between the two fingers 36 and 38.

A sensor 50 determines the spacing between the fingers 36, 38 and provides a spacing signal for the computer 32, from which the diameter can be computed.

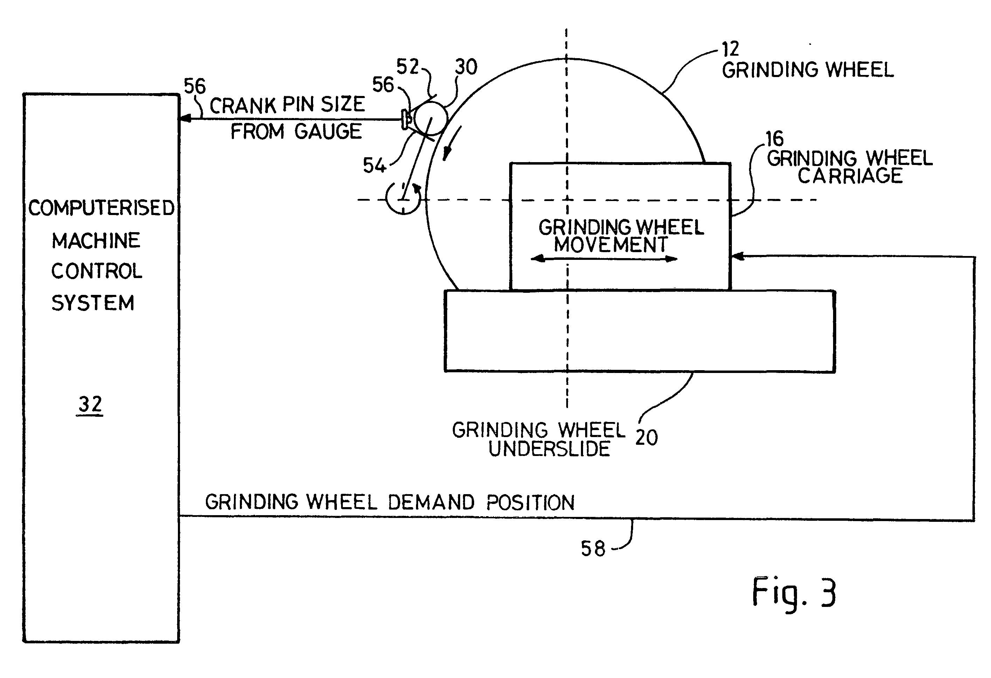

Figure 3 shows diagrammatically the grinding wheel 12, the wheelhead 16, the slide 20 and a different type of gauge from that shown in Figures 1 and 2. This gauge engages a crankpin 30 by means of two fixed converging fingers 52, 54 with a sensor 56 for determining the distance between the converging fingers at which the fingers make contact with the pin, the computer 32 receiving the gauging signals along line 56 and computing therefrom the pin diameter and delivering inter alia a position signal to the wheelhead drive via line 58. Not shown are the signal paths from the computer 32 to the other drives for moving the gauge into and out of engagement and controlling the speed of rotation and angular position of the crankshaft and therefore the position of the pin being ground.

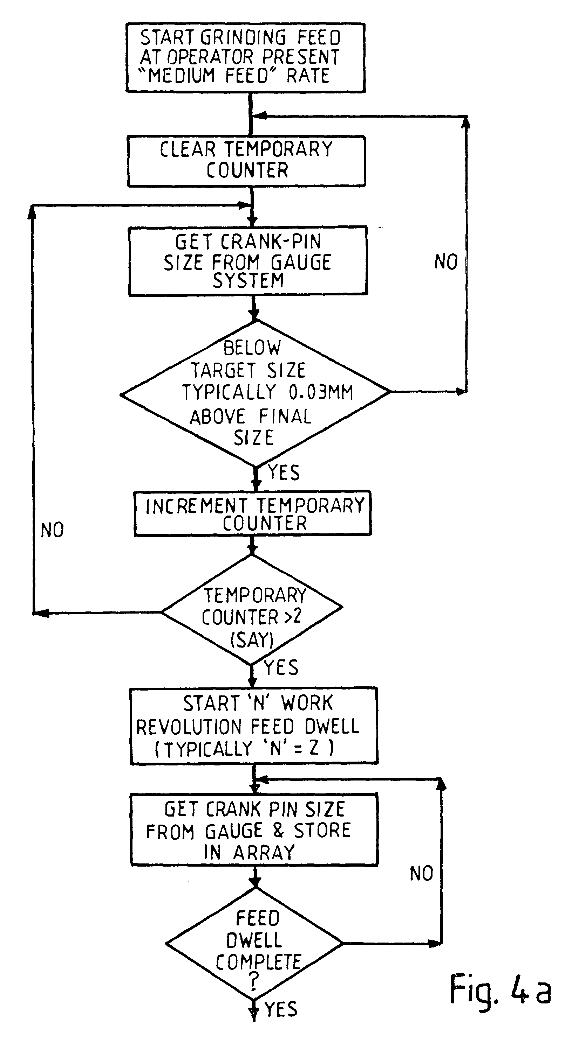

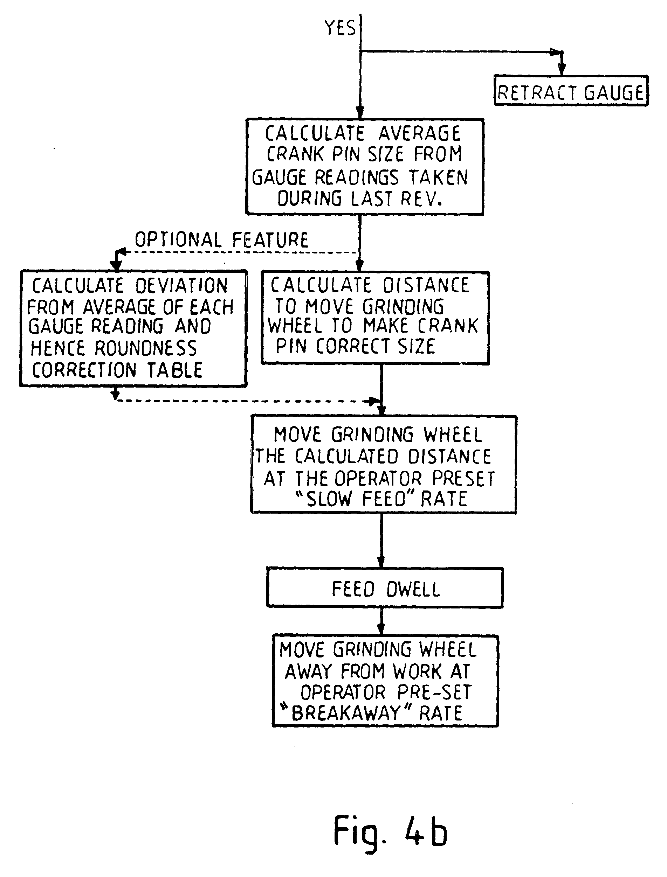

Figures 4a and 4b show the commands which the computer must generate, the inputs it must respond to and the decisions it must make, under the control of the programme loaded into its memory.

An optional step is shown in which any deviation of each diameter computation (or direct reading - depending on the type of gauge used), from the computed average diameter value, is computed and stored in association with the angular position of the pin at the time, so that the roundness of the pin can be indicated, and/or plotted and/or displayed if desired.

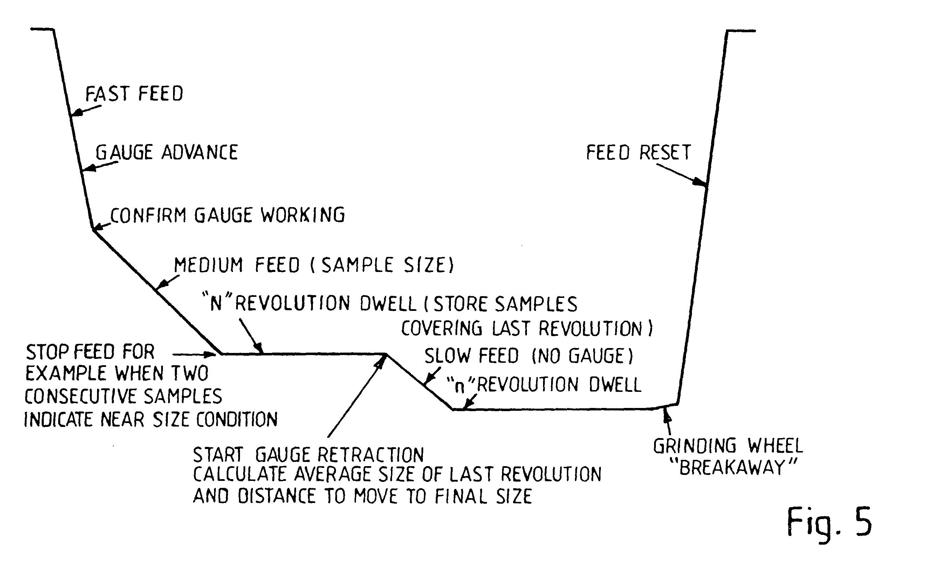

The various steps making up the method of fast accurate determination of, and subsequent control of crank pin size is shown graphically in Figure 5 which is a labelled graph of the CNC crankpin gauged grinding cycle performed by the machine of Figure 1 when controlled by a computer program so as to perform the steps of Figures 4a and 4b.

An initial fast grinding feed is used to "roundout" the crankpin. During this feed the in-process sizing gauge is advanced onto the workpiece. The fast grinding feed is stopped after a fixed feed amount independent of the gauge. At the end of the fast feed the gauge 34 is used by the machine control computer to sample the size of the crankpin 30. A prerequisite for the grinding cycle to proceed beyond this point is that this sample of size sensibly confirms that the gauge is on the crankpin and functioning properly.

After confirming that the gauge is functioning properly the grinding feed restarts at a medium rate of feed. In normal operation this feed will be stopped in response to signals derived from the in-process gauge 34 and sampled by the machine control computer 32 as follows.

Whilst the grinding feed is proceeding towards a target size near final size, typically 0.030 mm on diameter above final size, the instantaneous size of the crankpin being ground is continuously sampled by the machine control computer.

If one or two or more consecutive samples of crank pin size, consecutive samples, are found to be at or below the target size, the controlling computer immediately stops the grinding feed and initiates a feed dwell. This dwell, measured as N workpiece turns, permits the pin being ground to achieve good geometric roundness and a stable size. This procedure gives an optimum response to fast grinding feeds commensurate with fast manufacturing times. During this feed dwell, typically two work revolutions, the controlling computer stores a number of consecutive samples of crankpin size measured at different angular positions of the pin relative to the gauge fingers so that it can calculate an average value of the workpiece diameter.

At the completion of this dwell, the average diameter value is calculated, and this value used to calculate the feed distance to achieve the desired final size of the pin. The controlling computer then initiates an incremental feed to final size. At the start of this incremental feed, the gauge, having completed its work, is retracted, with the object of minimising manufacturing time. Because the feed to final size is not being controlled by gauge, it does not have to be slow but can be optimised to eliminate the build-up of machining vibrations and/or minimise machining time.

After a final "sparkout feed dwell", measured as n workpiece turns, the grinding wheel is retracted, initially at a slow rate so as not to leave any grinding wheel breakaway mark, and then at a fast rate to minimise manufacturing time.

## Claims

1. A method of grinding an external surface of a cylindrical workpiece according to which the workpiece is ground to a predetermined target size, above final size, sensed by continuous in-process gauging, whereupon a feed dwell is initiated and the workpiece size is averaged by use of the in-process gauge and a computing means, the averaged workpiece size is utilised by the computing means to determine the incremental feed required to grind the workpiece to final size, and grinding of the workpiece is completed without further gauging.

2. A method as claimed in claim 1, wherein the workpiece is a crankpin of a crankshaft and the computer control the grinding wheel feed to advance and retract the wheel so as to maintain grinding contact as the crankshaft rotates.

3. A method as claimed in claim 1 or 2, wherein an initial step of fast grinding feed is employed to "roundout" the workpiece, during which the workpiece is engaged.

4. A method as claimed in claim 3, wherein the in-process gauge is advanced onto the workpiece during the fast grinding step.

5. A method as claimed in claim 3 or 4, wherein the fast grinding feed is stopped after a fixed feed amount independent of the gauge.

6. A method as claimed in claim 5, wherein after the completion of the fast grinding step the gauge signals supplied to the computer are used to determine the size to which the workpiece has been ground.

7. A method as claimed in claim 6, wherein the computer is programmed to ascertain if the size of the workpiece diameter is within preset limits.

8. A method as claimed in claim 7, wherein provided the workpiece diameter is within the limits the computer initiates the grinding feed at a medium feed rate and grinding continues until the gauge signals indicate that the workpiece diameter is at or just below a target size, greater than the final size, at which point the computer initiates a feed dwell for N workpiece resolutions, to permit sparkout and to improve the roundness and size stability of the workpiece.

9. A method as claimed in claim 8, wherein the averaging is performed using gauge size signals obtained during one or more rotations of the workpiece during or at the end of sparkout feed dwell time.

10. A method as claimed in claim 9, wherein the workpiece diameter is computed from gauging performed at a plurality of different angular positions of the crankpin relative to the gauge and the computer is programmed to store each computed size value together with the angular orientation of the crankpin at which the computation is performed, so that information is available from which the roundness of the workpiece can be determined, and which can be used to display a representation of the workpiece cross-section roundness in a computer display or the like.

11. A method according to claim 9 or claim 10, wherein the computer also calculates the deviations from average of the size measurements and, from use of a roundness correction table, use these calculations of deviations in calculation of the final feed increment.

12. A method as claimed in claim 10 or claim 11, wherein the deviation of the measured values from the average value is computed for each angular position for plotting and/or display and/or indicating the workpiece roundness.

13. Apparatus for carrying out the method of claim 1, comprising a grinding machine having an in-process gauge, and a computer receptive of size signals from the gauge and programmed to control the grinding machine, wherein the computer is also programmed to stop grinding and initiate a feed dwell when the workpiece has been ground to a predetermined size above final size, and to compute the incremental feed required to complete grinding without further gauging, to achieve final size from size signals received from the gauge during the feed dwell interval.

14. Apparatus according to claim 13, wherein the computer includes a counter for counting a predetermined number of workpiece revolutions making up the feed dwell.

15. Apparatus according to claim 13 or claim 14, in which a drive means for the gauge is responsive to signals received from the computer to advance the gauge during an initial ungauged first advance of the grinding wheel towards the workpiece and to retract the gauge at the beginning of the feed dwell.

## Patentansprüche

1. Verfahren zum Schleifen einer Außenfläche eines zylindrischen Werkstückes, bei dem das Werkstück auf eine vorbestimmte, über der Endgröße liegenden Zielgröße geschliffen wird, die durch einen kontinuierlichen, während des Betriebes stattfindenden Messvorgangs festgestellt wird, worauf eine Vorschub-Verweildauer eingeleitet wird und die Werkstückgröße durch Verwendung der während des Betriebes arbeitenden Messvorrichtung und eines Rechners gemittelt wird, die gemittelte Werkstückgröße von dem Rechner verwendet wird, um den schrittweisen Vorschub zu bestimmrn, der erforderlich ist, um das Werkstück auf Endgröße zu schleifen, und das Schleifen des Werkstückes ohne weitere Messung abgeschlossen wird.

2. Verfahren nach Anspruch 1, bei dem das Werkstück ein Kurbelzapfen einer Kurbelwelle ist, und die Rechnersteuerung der Schleifscheiben-Vorschub zum Zustellen und Zurückziehen der Schleifscheibe ist, damit der Schleifkontakt aufrecht erhalten wird, wenn die Kurbelwelle rotiert.

3. Verfahren nach Anspruch 1 oder 2, bei dem ein Anfangsschritt eines schnellen Schleifvorschubs verwendet wird, um das Werkstück auszurunden, wobei während dieses Vorganges das Werkstück beaufschlagt bleibt.

4. Verfahren nach Anspruch 3, bei dem die im Betrieb arbeitende Messvorrichtung gegen das Werkstück während des Schnell-Schleifschrittes zugestellt wird.

5. Verfahren nach Anspruch 3 oder 4, bei dem die Schnell-Schleifzustellung nach einem fest vorgegebenen Vorschubwert unabhängig von der Messvorrichtung angehalten wird.

6. Verfahren nach Anspruch 5, bei dem nach Beendigung des Schnell-Vorschubschrittes die Mess-Signale, die dem Rechner zugeführt werden, zur Bestimmung der Größe verwendet werden, auf die das Werkstück geschliffen worden ist.

7. Verfahren nach Anspruch 6, bei dem der Rechner so programmiert wird, dass sichergestellt ist, ob die Größe des Werkstück-Durchmessers innerhalb voreingestellter Grenzwerte liegt.

8. Verfahren nach Anspruch 7, bei dem der Rechner, vorausgesetzt, dass der Werkstück-Durchmesser innerhalb der Grenzwerte liegt, den Schleifvorschub mit einer mittleren Vorschub-Geschwindigkeit einleitet und den Schleifvorgang fortsetzt, bis die Mess-Signale angeben, dass der Werkstück-Durchmesser einen Zielwert erreicht oder gerade unterhalb eines Zielwertes liegt, der größer ist als die Endgröße, wobei an dieser Stelle der Rechner eine Vorschub-Verweildauer über N Werkstück-Umdrehungen einleitet, um ein Ausfeuern zu ermöglichen und die Rundheit und Größenstabilität des Werkstückes zu verbessern.

9. Verfahren nach Anspruch 8, bei dem die Mittelung unter Verwendung von Messgrößen-Signalen durchgeführt wird, die während einer oder mehrerer Umdrehungen des Werkstückes während oder am Ende der Ausfeuerungs-Vorschubverweildauer erhalten werden.

10. Verfahren nach Anspruch 9, bei dem der Werkstück-Durchmesser aufgrund der Messung berechnet wird, die an einer Vielzahl von unterschiedlichen Winkelpositionen des Kurbelzapfens relativ zu der Messvorrichtung durchgeführt werden, und der Rechner so programmiert wird, dass er jeden berechneten Größenwert zusammen mit der Winkelorientierung des Kurbelzapfens, bei dem die Berechnung durchgeführt wird, speichert, so dass Informationen vorliegen, aus denen die Rundheit des Werkstückes bestimmt werden kann, und die benutzt werden können, um eine Darstellung der Rundheit des Querschnittes des Werkstückes auf einem Bildschirm eines Rechners oder dergl. anzuzeigen.

11. Verfahren nach Anspruch 9 oder 10, bei dem der Rechner einer die Abweichungen vom Mittelwert der Größen-Messungen berechnet und aufgrund einer Rundheits-Korrekturtabelle diese Berechnungen von Abweichungen für die Berechnung des End-Vorschubschrittes verwendet werden.

12. Verfahren nach Anspruch 10 oder 11, bei dem die Abweichung der gemessenen Werte von dem Mittelwert für jede Winkelposition berechnet wird, um die Rundheit des Werkstückes aufzutragen und/oder darzustellen und/oder anzuzeigen.

13. Einrichtung zur Durchführung des Verfahrens nach Anspruch 1, mit einer Schleifmaschine mit einer während des Verfahrens arbeitenden Messvorrichtung und einem Rechner, der Größen-Signale aus der Mess-Vorrichtung aufnimmt und für die Steuerung der Schleifmaschine programmiert ist, wobei der Rechner ferner auch so programmiert ist, dass er den Schleifvorgang anhält und eine Vorschub-Verweilperiode einleitet, wenn das Werkstück auf eine vorbestimmte Größe über der Endgröße geschliffen worden ist, und den schrittweisen Vorschub, der für die Beendigung des Schleifvorganges erforderlich ist, ohne weitere Messung berechnet, um eine Endgröße aus den Größen-Signalen zu erzielen, die von der Messvorrichtung während es Vorschub-Verweildauer-Intervalls aufgenommen wird.

14. Einrichtung nach Anspruch 13, bei der der Rechner einen Zähler zum Zählen einer vorbestimmten Anzahl von Werkstückumdrehungen, die die Vorschub-Verweildauer ergeben, aufweist.

15. Einrichtung nach Anspruch 13 oder 14, bei der eine Antriebsvorrichtung für die Messvorrichtung auf Signale anspricht, die aus dem Rechner aufgenommen werden, um die Messvorrichtung während eines anfänglichen, nicht gemessenen ersten Vorschubs der Schleifscheibe gegen das Werkstück vorzuschieben und die Messvorrichtung zu Beginn der Vorschub-Verweildauer zurück zu ziehen.

## Revendications

1. Une méthode de rectification d'une face extérieure d'une pièce cylindrique permettant de rectifier la pièce à une dimension cible prédéterminée, supérieure à la dimension finale, détectée par une mesure effectuée en continu au cours du procédé, l'avance étant arrêtée provisoirement lorsque cette dimension cible est atteinte et le calcul de la taille moyenne de la pièce étant effectué au moyen d'un calibre et d'un appareil de calcul et les dimensions moyennes de la pièce étant utilisées par l'appareil de calcul afin de déterminer l'avance incrémentale nécessaire pour rectifier la pièce jusqu'aux dimensions spécifiées finales, la rectification de la pièce étant alors effectuée sans aucune mesure supplémentaire.

2. Une méthode conforme à la revendication 1 dans laquelle la pièce est un maneton de vilebrequin et l'ordinateur détermine l'avance de la meule en avançant ou en rétractant cette dernière de façon à maintenir le contact de rectification au fur et à mesure de la rotation du vilebrequin.

3. Une méthode conforme à la revendication 1 ou 2 dans laquelle on effectue au départ une rectification rapide pour « arrondir » la pièce, cette dernière étant engagée au cours de l'opération.

4. Une méthode conforme à la revendication 3 dans laquelle le calibre de mesure en cours de procédé est avancé sur la pièce au cours de la rectification rapide.

5. Une méthode conforme à la revendication 3 ou 4 dans laquelle la rectification rapide est arrêtée au bout d'une avance fixe, indépendamment du calibre.

6. Une méthode conforme à la revendication 5 dans laquelle, après l'exécution de la rectification rapide, les signaux transmis par le calibre à l'ordinateur sont utilisés pour déterminer les dimensions auxquelles la pièce a été rectifiée.

7. Une méthode conforme à la revendication 6 dans laquelle l'ordinateur est programmé de façon à vérifier que le diamètre de la pièce est compris dans des limites prédéterminées.

8. Une méthode conforme à la revendication 7 dans laquelle, si le diamètre de la pièce est compris dans des limites prédéterminées, l'ordinateur déclenche la meule qui avance à une vitesse moyenne et la rectification se poursuit jusqu'à ce que les signaux transmis par le calibre indiquent que le diamètre de la pièce est égal aux dimensions cibles, ou juste au-dessous de ce diamètre, mais est toutefois supérieur au diamètre final ; l'ordinateur déclenche alors un arrêt de l'avance pendant N tours de la pièce, afin de permettre l'arrêt d'étincelage et d'optimiser la rondeur et la stabilité des dimensions de la pièce.

9. Une méthode conforme à la revendication 8 dans laquelle le calcul de la valeur moyenne est effectué sur la base des mesures transmises par le calibre au cours d'un ou plusieurs tours de la pièce, pendant la période d'arrêt de l'avance pour l'arrêt d'étincelage, ou au bout de cette période.

10. Une méthode conforme à la revendication 9 dans laquelle le diamètre de la pièce est calculé sur la base de mesures effectuées dans toute une série de positions angulaires diverses du maneton par rapport au calibre, et l'ordinateur est programmé pour mémoriser chacune de ces dimensions calculées ainsi que l'orientation angulaire du maneton à laquelle le calcul est effectué, afin que l'on dispose d'informations sur la base desquelles on pourra déterminer la rondeur de la pièce, et qui peuvent être utilisées pour afficher une représentation de la rondeur transversale de la pièce sur l'écran d'affichage d'un ordinateur ou un dispositif équivalent.

11. Une méthode conforme à la revendication 9 ou 10 dans laquelle l'ordinateur calcule également les écarts par rapport à la moyenne des dimensions mesurées et, au moyen d'une table de correction de la rondeur, utilise ces calculs des écarts pour calculer l'incrément de l'avance finale.

12. Une méthode conforme à la revendication 10 ou 11 dans laquelle on effectue un calcul de l'écart des mesures relevées par rapport à la valeur moyenne pour chaque position angulaire, afin de tracer et/ou d'afficher et/ou indiquer la rondeur de la pièce.

13. Un appareil pour l'exécution de la méthode décrite dans la revendication 1 comprenant une rectifieuse munie d'un calibre de mesure en cours de procédé et un ordinateur recevant des signaux de dimensions émis par le calibre et programmé pour assurer la régulation de la rectifieuse, cet ordinateur étant également programmé pour arrêter la rectification et déclencher un arrêt provisoire de l'avance lorsque la pièce a été rectifiée à des dimensions prédéterminées supérieures aux dimensions finales, et pour calculer l'avance incrémentale requise pour achever la rectification sans effectuer de mesures supplémentaires, en réalisant les dimensions finales à partir des signaux de dimensions reçus du calibre au cours de la période d'arrêt provisoire.

14. Un appareil conforme à la revendication 13 dans lequel l'ordinateur comprend un compteur pour le comptage d'un nombre prédéterminé de tours de la pièce dont l'ensemble représente l'arrêt provisoire.

15. Un appareil conforme à la revendication 13 ou à la revendication 14 dans lequel un dispositif d'entraînement pour le calibre est sensible aux signaux reçus de l'ordinateur pour avancer le calibre au cours d'une avance initiale non mesurée de la meule vers la pièce et rétracter le calibre au début de la période d'arrêt provisoire.
